# EUROPEAN PATENT APPLICATION

(11) **EP 3 139 036 A1**
(43) Date of publication of application: **08.03.2017**
(21) Application number: 16172396.0
(22) Date of filing: 01.06.2016
(51) Int. Cl.: F03D 3/00, F03D 3/04, F03D 80/70

(54) **WIND POWER GENERATOR**

(30) Priority: 07.09.2015 TW 104129549
(71) Applicant: Taiwan vertical axis wind turbine Co., Ltd., 91252 Pingtung County (TW)
(72) Inventor: CHUNG, Chun-Neng, 91251 Pingtung County (TW)
(74) Representative: Zimmermann, Tankred Klaus

(57) **Abstract**

A wind power generator includes two spaced apart support members (31), multiple wind-guiding blades (32) interconnecting the support members (31), a rotating unit (4) and a power generating unit (5) connected to the rotating unit (4). The rotating unit (4) includes two bases (41) disposed on and micro-movable relative to the support members (31), a shaft unit (42), a rotating frame unit (3) and multiple blades (44) connected to the rotating frame unit (3). Each base (41) includes a bearing unit (411) including a substrate (413) formed with a central bore (400) and a bearing member (414) disposed in the central bore (400), and a connecting unit (412) including a connecting member (416) extending through the bearing member (414). The shaft unit (42) interconnects the connecting members (416). The rotating frame unit (3) surrounds and is connected to the bases (41) and the shaft unit (42).

## Description

The disclosure relates to a wind power generator, and more particular to a vertical wind power generator.

With the rise of environmental consciousness, renewable energy has attracted global attention, in which wind power is one of the most studied types of renewable energy.

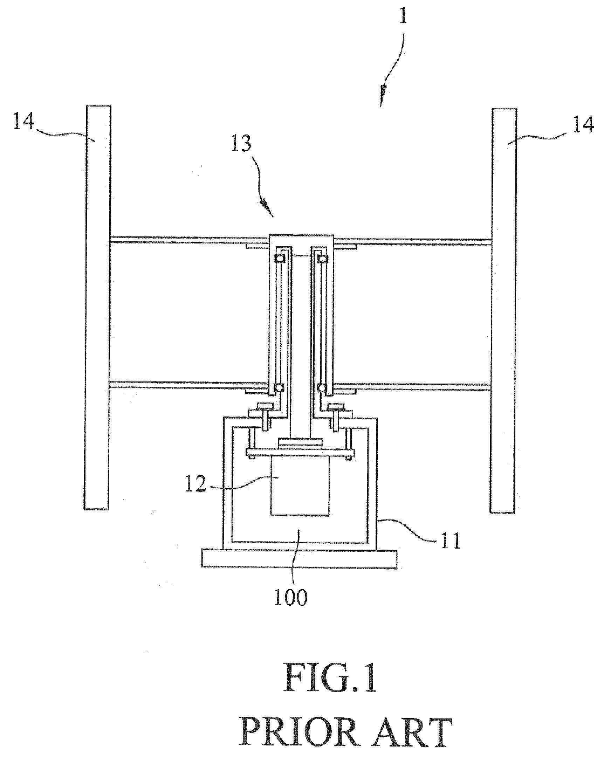

Referring to Figure 1, a first conventional wind power generator 1 includes a base unit 11 that defines a receiving space 100, a generator 12 that is disposed in the receiving space 100, a rotating unit 13 that is disposed on the base unit 11 and that is connected to the generator 12, and a plurality of blade units 14 that are co-rotatably connected to the rotating unit 13. A wind blown toward the first conventional wind power generator 1 may push the blade units 14 to drive the rotating unit 13 into rotation, and therefore drive the generator 12 to generate electrical power.

However, the first conventional wind power generator 1 may not be able to fully utilize the wind, and a part of the wind may hit the base unit 11 and the rotating unit 13 and generate stress within the base unit 11 and the rotating unit 13. The stress may cause damage of the first conventional wind power generator 1. Moreover, the rotating unit 13 may include mechanical components such as rotary shaft, bearing, busing, etc. Each of the mechanical components may have dimensional error that may affect operation of the first conventional wind power generator 1, which may also cause damage to the first conventional wind power generator 1 after long-term use. Thermal expansion and cold shrinkage of each of the mechanical components may be another factor that affects operation of the first conventional wind power generator 1. As a result, efficiency of electrical power generation may be lowered and maintenance cost of the first conventional wind power generator 1 may be increased due to the abovementioned factors.

Referring to Figure 2, U.S. Patent No. 7,969,036 B2 discloses a second conventional wind power generator 2 includes a base unit 21, a rotating unit 22 and a turbine unit 23. The rotating unit 22 includes a rotary shaft 211 that is rotatably disposed on the base unit 21, a plurality of blade members 222 that are co-rotatably connected to the rotary shaft 211, and a power generating member 223 that is disposed in the base unit 21 and that is co-rotatably connected to the rotary shaft 211. The turbine unit 23 includes a plurality of turbine members 231 that are disposed on the base unit 21, and that are angularly spaced apart from each other relative to the rotary shaft 211. With the blade members 222 arranged vertically along the rotary shaft 211, winds blown in different altitudes may be effectively utilized for power generation.

However, the dimensional error and thermal expansion and cold shrinkage problems associated with the first conventional wind power generator 1 may still affect the second conventional wind power generator 2.

Therefore, an object of the present disclosure is to provide a wind power generator that can alleviate at least one of the drawbacks associated with the prior art.

According to the present disclosure, a wind power generator includes a frame unit, a rotating unit and a power generating unit.

The frame unit includes two support members spaced apart from each other, and a plurality of wind-guiding blades disposed between and interconnecting the support members.

The rotating unit includes two bases, a shaft unit, a rotating frame unit and a plurality of blades. The bases are respectively disposed on and micro-movable relative the support members. Each of the bases includes a bearing unit and a connecting unit. The bearing unit includes a substrate formed with a central bore, and a bearing member disposed on the substrate and within the central bore of the substrate. The connecting unit includes a connecting member extending through the bearing member and the central bore of the substrate. The shaft unit co-rotatably interconnects the connecting members of the connecting units of the bases. The rotating frame unit surrounds and is co-rotatably connected to the bases and the shaft unit. The blades are connected to the rotating frame unit, and are angularly spaced apart from each other relative to the shaft unit.

The power generating unit includes a power generating member that is co-rotatably connected to the rotating unit, and that generates electric power when in rotation.

Airflow is guided by the wind-guiding blades toward the blades of the rotating unit to rotate the rotating unit.

Other features and advantages of the present disclosure will become apparent in the following detailed description of the embodiment(s) with reference to the accompanying drawing, of which:
Figure 1 is a side view of a first conventional wind power generator;

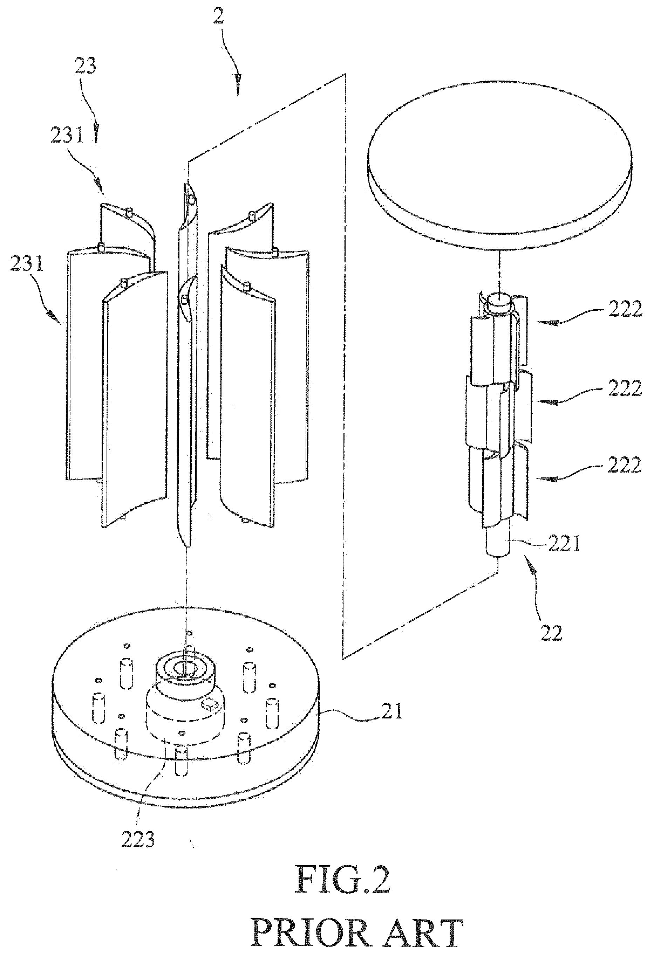

Figure 2 is a partially exploded perspective view of a second conventional wind power generator;
Figure 3 is a perspective view of a first embodiment of a wind power generator according to this disclosure;
Figure 4 is a perspective view of a frame unit and a rotating unit of the first embodiment;
Figure 5 is a side view of the first embodiment;
Figure 6 is an exploded schematic view of a base of the frame unit of the first embodiment;
Figure 7 is a partly sectional schematic view of the base of the first embodiment;
Figure 8 is a exploded schematic view of the first embodiment, illustrating interconnection among the base and two shaft units via a fixing unit;
Figure 9 is an enlarged schematic sectional view, illustrating the interconnection of Figure 8;
Figure 10 is a fragmentary top view of the first embodiment, showing the base disposed on the frame unit;
Figure 11 is a schematic view showing a variation of the first embodiment;
Figure 12 is a view similar to Figure 10, but showing the variation of the first embodiment; and
Figure 13 is a perspective view of a second embodiment of the wind power generator according to this disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

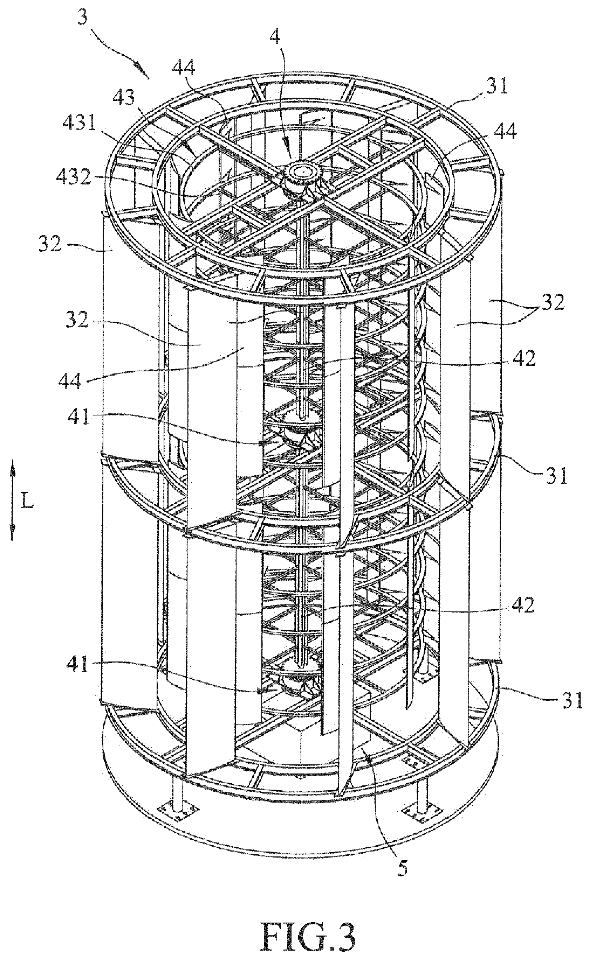

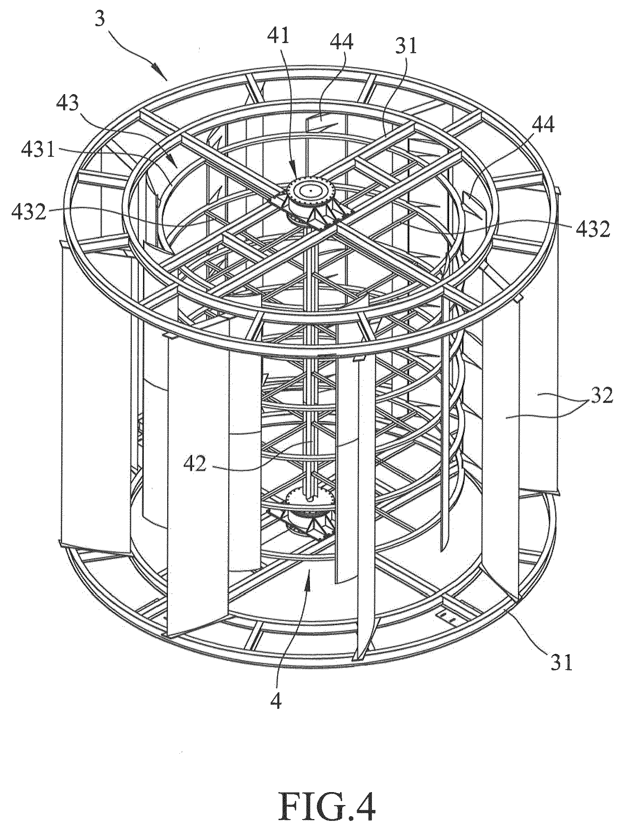

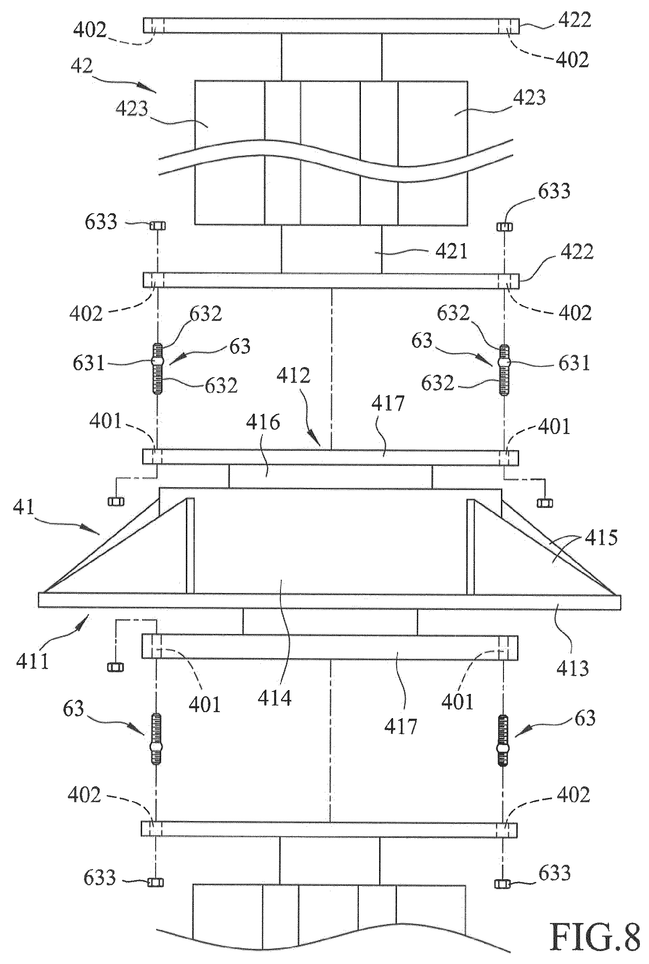

Referring to Figures 3 and 8, a first embodiment of a wind power generator includes a plurality of frame units 3, a plurality of rotating units 4 and a power generating unit 5. The frame units 3 may be stacked vertically. In this embodiment, the number of the frame units 3 is two, and the number of the rotating units 4 is also two (see Figure 3). It should be particularly pointed out that the numbers of the frame units 3 and the rotating units 4 may each be one or more, and should be determined by practical requirements. For the sake of brevity, only one frame unit 3 and one rotating unit 4 (see Figure 4) will be given detailed description hereinafter.

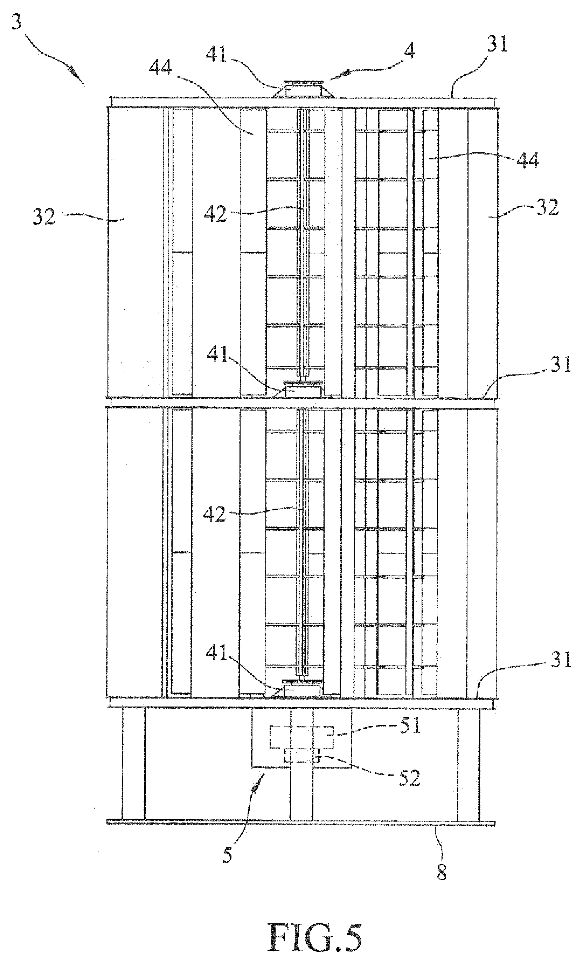

The frame unit 3 includes two support members 31 that are spaced apart from each other in a vertical direction (L), and a plurality of wind-guiding blades 32 that are disposed between and interconnect the support members 31. The wind power generator may be fixedly mounted to a base plate 8 (see Figure 5) . One of the support members 31 that is closest to the base plate 8 is fixedly connected to the base plate 8. In practical cases, the base plate 8 may be changed to a land, a rock, a rooftop, a vehicle roof, etc.

The rotating unit 4 includes two bases 41, a shaft unit 42, a rotating frame unit 43 and a plurality of blades 44. The bases 41 are respectively disposed on and micro-movable relative to the support members 31 of the frame unit 3.

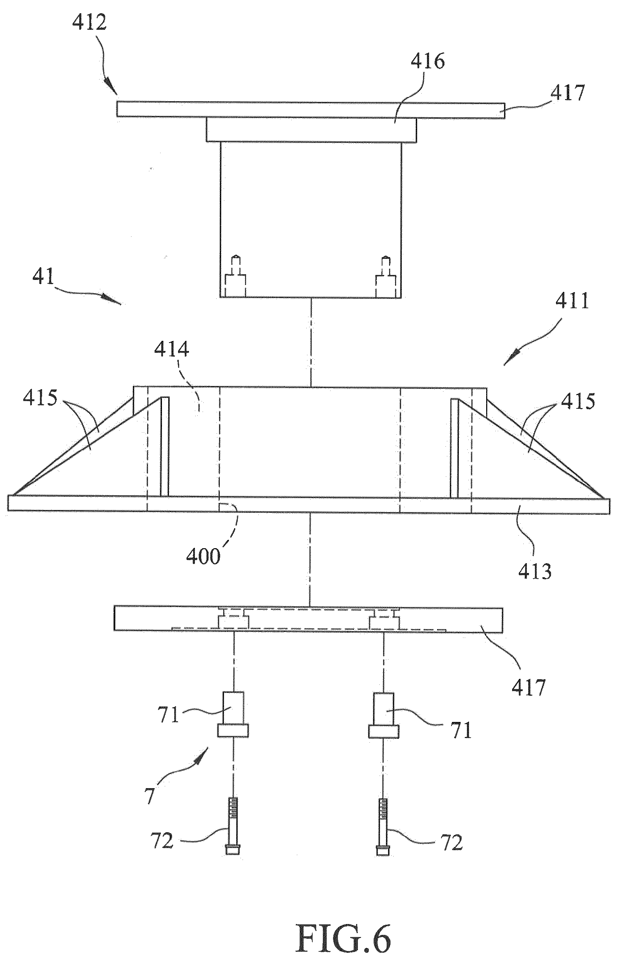

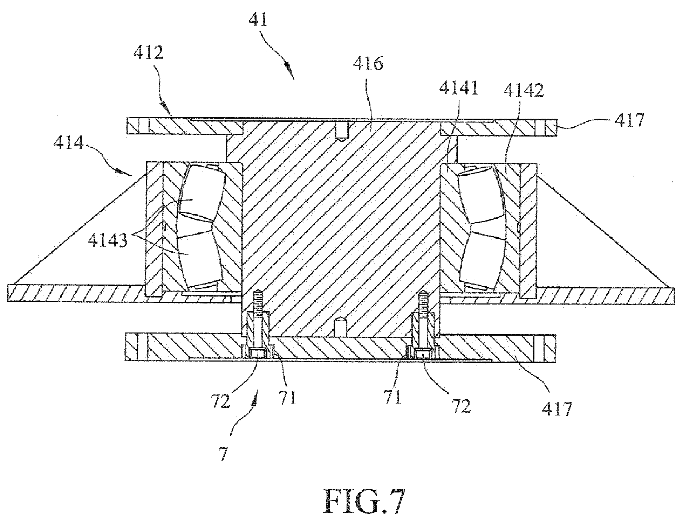

The structures of the bases 41 are identical to each other, and therefore only one of the bases 41 is described in this paragraph for the sake of brevity. Referring further to Figures 6 and 7, the base 41 includes a bearing unit 411 and a connecting unit 412. The bearing unit 411 of the base 41 includes a substrate 413 that is formed with a central bore 400, and a bearing member 414 that is disposed on the substrate 413 and within the central bore 400 of the substrate 413. In this embodiment, the bearing unit 411 further includes a plurality of reinforcing plates 415 that are connected between the substrate 413 and the bearing member 414 of the base 41 for enhancing the mechanical strength of the bearing unit 411. The connecting unit 412 of the base 41 includes a connecting member 416 that extends through the bearing member 414 and the central bore 400 of the substrate 413. In this embodiment, the connecting unit 412 of the base 41 further includes two connecting plates 417 that are respectively connected fixedly to opposite ends of the connecting member 416. The upper connecting plate 417 and the connecting member 416 may be formed as one piece, and the lower connecting plate 417 may be connected to the connecting member 416 via a fastening unit 7. Specifically, the fastening unit 7 includes two pins 71 and two fasteners 72. The pins 71 penetrate through the lower connecting plate 417 and penetrate into the connecting member 416, and the fasteners 72 respectively fastens the pins 71 to fix the lower connecting plate 417 to the connecting member 416. Such a connection mechanism is well known in the art, and therefore will not be further described. In this embodiment, the bearing member 414 of the bearing unit 411 of the base 41 may be a spherical roller bearing, and includes an inner race 4141, an outer race 4142 and a plurality of rolling elements 4143. The inner race 4141 is sleeved fixedly on the connecting member 416 of the connecting unit 412. The outer race surrounds the inner race 4141, and has a curved internal surface facing the inner race 4141 and curved along an axial direction (not shown) of the outer race 4142. The rolling elements 4143 are disposed between the inner race 4141 and the outer race 4142. The inner race 4141 is operable to misalign a central axis (not shown) of the outer race 4142 from that of the inner race 4141 so as to change the position of the rotating axis of the connecting member 416 relative to the outer race 4142.

The shaft unit 42 co-rotatably interconnects the connecting members 416 of the connecting units 412 of the bases 41. To be more specific, the shaft unit 42 includes a shaft member 421, two connecting members 422 and a plurality of blade members 423. The connecting members 422 are respectively connected to two opposite ends of the shaft member 421. The blade members 423 are connected to the shaft member 421 and angularly spaced apart from each other relative to the shaft member 421. One of the connecting members 422 of the shaft unit 42 is co-rotatably connected to a corresponding one of the connecting plates 417 of the connecting unit 412 of one of the bases 41. The other one of the connecting members 422 of the shaft unit 42 is co-rotatably connected to a corresponding one of the connecting plates 417 of the connecting unit 412 of the other one of the bases 41.

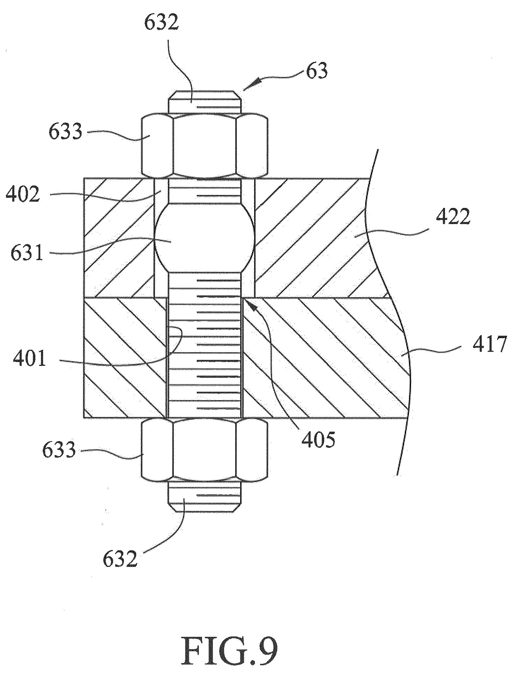

Referring to Figure 8, in this embodiment, each of the connecting plates 417 of the connecting unit 412 of each of the bases 41 is formed with a plurality of third perforations 401. Each of the connecting members 422 of the shaft unit 42 is formed with a plurality of fourth perforations 402. The fourth perforations 402 of each of the connecting members 422 of the shaft unit 42 respectively correspond in position to the third perforations 401 of a corresponding one of the connecting plates 417 of the connecting unit 412 of a corresponding one of the bases 41 to form a plurality of perforation assemblies 405 (see Figure 9). Each of the perforation assemblies 405 is defined by a respective one of the third perforations 401 and a corresponding one of the fourth perforations 402. The wind power generator further includes a fixing unit 6 including a plurality of connecting members 63 that are respectively inserted into the perforation assemblies 405. Each of the connecting members 63 has a spherical portion 631 that is oval shaped and that is disposed within the fourth perforation 402 of a corresponding one of the perforation assemblies 405, and has a diameter substantially identical to a diameter of the fourth perforation 402 of the corresponding one of the perforation assemblies 405, such that the spherical portions 631 of the connecting members 63 can be slightly movable within the respective fourth perforations 402 of the perforation assemblies 405.

Referring to Figure 9, a detailed description of one of the connecting members 63, a corresponding one of the perforation assemblies 405, and the third and fourth perforations 401, 402 of the respective one of the perforation assemblies 405 is provided in this paragraph. The connecting member 63 further has two threaded portions 632 opposite to each other relative to the spherical portion 631, and includes two nuts 633. One of the threaded portions 632 is threaded into the third perforation 401, and the other one of the threaded portions 632 extends through the fourth perforation 402. The nuts 633 are respectively threaded into the threaded portions 632 to confine the spherical portion 631 of the connecting member 63 within the fourth perforation 402 of the perforation assembly 405, and to connect the corresponding connecting plate 417 with the corresponding connecting member 422.

Referring to Figures 3 to 5, the rotating frame unit 43 surrounds and is co-rotatably connected to the bases 41 and the shaft unit 42. The blades 44 are connected to the rotating frame unit 43, and are angularly spaced apart from each other relative to the shaft unit 42. In this embodiment, the rotating frame unit 43 includes a frame member 431 and a plurality of reinforcing members 432. The frame member 431 surrounds and is co-rotatably connected to the bases 41 and the shaft unit 42. The reinforcing members 432 interconnect the frame member 431 and the shaft unit 42 for enhancing the mechanical strength of the rotating frame unit 43. The blades 44 are connected to the frame member 431.

The power generating unit 5 includes a power generating member 51 (see Figure 5) that is co-rotatably connected to the rotating unit 4, and that generates electric power when in rotation. In this embodiment, the power generating unit 5 further includes a gearbox 52 (see Figure 5) interconnecting the rotating unit 4 and the power generating member 51 to transmit rotation from the rotating unit 4 to the power generating member 51.

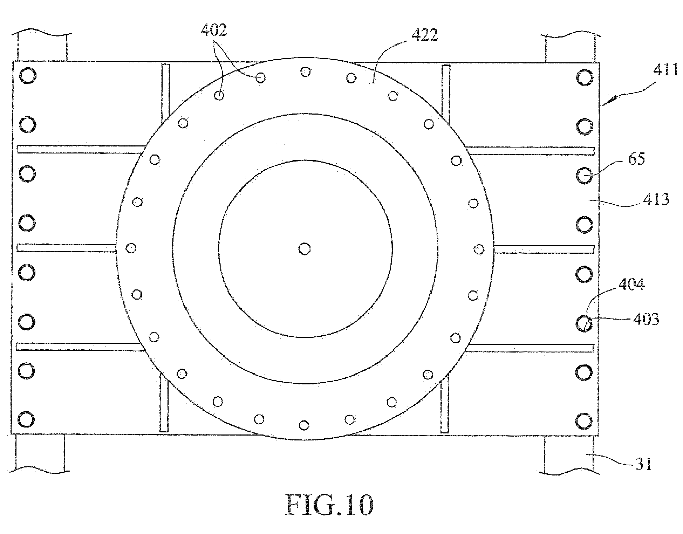

Referring to Figure 10, the substrate 413 of the bearing unit 411 of each of the bases 41 is formed with a plurality of first perforations 403, and includes a plurality of rubber rings 404 that are respectively disposed within the first perforations 403 of the substrate 413, such that movements of the bases 41 relative to the support members 31 are buffered. Each of the support members 31 of the frame unit 3 is formed with a plurality of second perforations 310 that respectively correspond in position to the first perforations 403 of the corresponding base 41. The fixing unit 6 further includes a plurality of fixing members 65, each of which is inserted into a respective one of the first perforations 403 of the bases 41 and a respective one of the second perforations 310 of the support members 31, such that the bases 41 are disposed on and micro-movable relative to the support members 31. In this embodiment, each of the fixing members 65 of the fixing unit 6 is a bolt, but may be changed according to practical requirements.

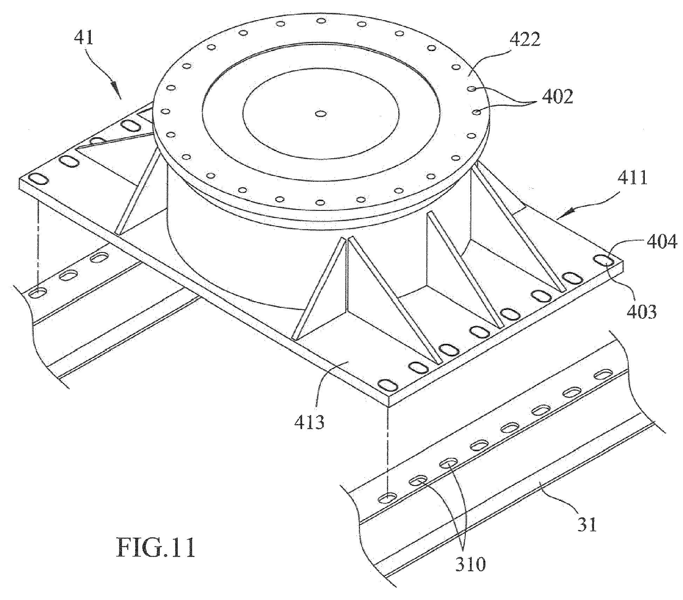

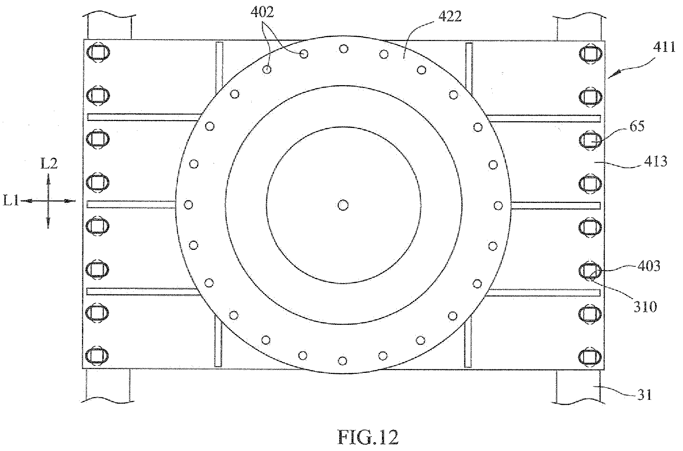

Figures 11 and 12 illustrate a variation of the first embodiment. In the variation, the first perforations 403 of each of the bases 41 are elongated in cross-section in a first direction (L1). The second perforations 310 of each of the support members 31 are elongated in cross-section in a second direction (L2) that is perpendicular to the first direction (L1). With the perforations elongated in cross-section, dimensional error of this variation of the first embodiment can be compensated.

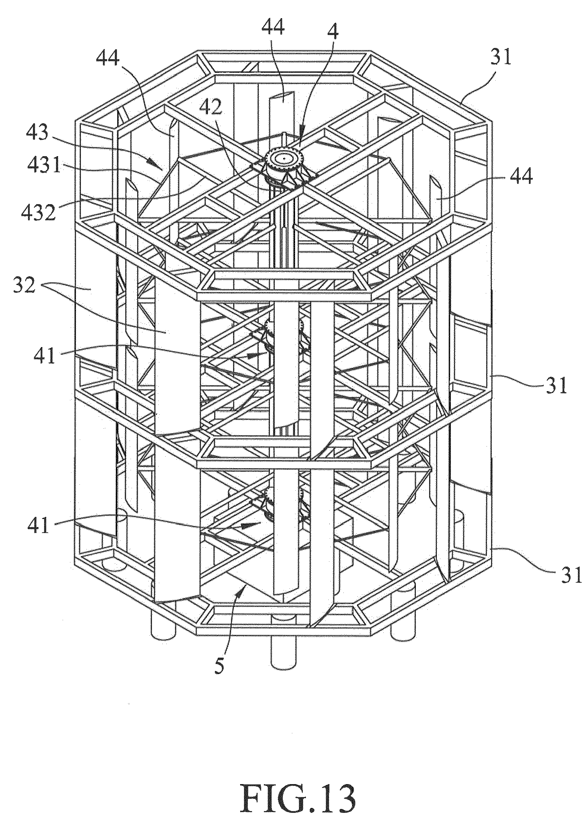

Referring to Figure 13, a second embodiment of the wind power generator has a structure similar to that of the first embodiment, with differences residing in the shapes of the support members 31 of the frame unit 3 and the rotating frame unit 43 of the rotating unit 4, and the orientations of the wind-guiding blades 32 of the frame unit 3. The orientations of the wind-guiding blades 32 should be changed according to practical requirements (e.g., wind type and direction), and the shapes of the support members 31 and the rotating frame unit 43 should be changed accordingly.

When the wind power generator of this disclosure is in use, an air flow toward the wind power generator is guided by the wind-guiding plates 32 of the frame unit 3 toward the rotating unit 4. A part of the wind pushes the blades 44 of the rotating unit 4 to cause rotation of the rotating unit 4 (i.e., the connecting units 412 of the bases 41, the shaft unit 42, the rotating frame unit 43 and the blades 44 are co-rotatable). The gearbox 52 and the power generating member 51 of the power generating unit 5 are then driven by the rotation of the rotating unit 4 to generate electric power. The remaining part of the wind may pass among the blades 44 without hitting the blades 44, but may push the blade members 423, which would also cause rotation of the shaft unit 42. Moreover, with the rubber rings 404 of the bearing units 411 of the bases 41, movements of the bases 41 respectively relative to the support members 31 are buffered, and the bases 41 are micro-movable relative to the support members 31, respectively. The term 'micro-movable' means to be able to move in a small amount of displacement, such as in micrometers or centimeters, based on the overall size of the wind power generator. In addition, with the spherical portions 631 of the connecting members 63 being slightly movable within the respective fourth perforations 402 of the perforation assemblies 405, a stress generated among the connecting units 412 of the bases 41 and the shaft units 42 when the wind power generator is blown by the wind can be alleviated. Furthermore, with the position of the rotating axis of the connecting member 416 relative to the outer race 4142 of the bearing member 414 being changeable, a stress generated in the rotating unit 4 during rotation can be alleviated, and deviation of the rotating axis caused by dimensional error can also be alleviated.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment, " "an embodiment, " an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A wind power generator **characterized by**:
a frame unit (3) that includes
two support members (31) spaced apart from each Other, and
a plurality of wind-guiding blades (32) disposed between and interconnecting said support members (31);
a rotating unit (4) that includes
two bases (41) respectively disposed on and micro-movable relative to said support members (31), each of said bases (41) including a bearing unit (411) that includes a substrate (413) formed with a central bore (400) and a bearing member (414) disposed on said substrate (413) and within said central bore (400) of said substrate (413), and a connecting unit (412) that includes a connecting member (416) extending through said bearing member (414) and said central bore (400) of said substrate (413),
a shaft unit (42) co-rotatably interconnecting said connecting members (416) of said connecting units (412) of said bases (41),
a rotating frame unit (3) surrounding and co-rotatably connected to said bases (41) and said shaft unit (42), and
a plurality of blades (44) connected to said rotating frame unit (3), and angularly spaced apart from each other relative to said shaft unit (42); and
a power generating unit (5) that includes a power generating member (51) co-rotatably connected to said rotating unit (4), and generating electric power when in rotation;
**characterized in that** airflow is guided by said wind-guiding blades (32) toward said blades (44) of said rotating unit (4) to rotate said rotating unit (4).

2. The wind power generator as claimed in Claim 1, **characterized in that**:
said substrate (413) of said bearing unit (411) of each of said bases (41) is formed with a plurality of first perforations (403), and includes a plurality of rubber rings (404) that are respectively disposed within said first perforations (403) of said substrate (413), such that movements of said bases (41) relative to said support members (31) are buffered;
each of said support members (31) of said frame unit (3) is formed with a plurality of second perforations (310) that respectively correspond in position to said first perforations (403) of the respective one of said bases (41);
said wind power generator further **characterized by** a fixing unit (6) that includes a plurality of fixing members (65); and
each of said fixing members (65) is inserted into a respective one of said first perforations (403) of said bases (41) and a respective one of said second perforations (310) of the support members (31), such that said bases (41) are respectively disposed on and micro-movable relative to said support members (31).

3. The wind power generator as claimed in Claim 2, **characterized in that**:
said first perforations (403) of each of said bases (41) are elongated in cross-section in a first direction (L1); and
said second perforations (310) of each of said support members (31) are elongated in cross-section in a second direction (L2) perpendicular to the first direction (L1).

4. The wind power generator as claimed in Claim 1, **characterized in that** said bearing member (414) of said bearing unit (411) of each of said bases (41) includes
an inner race (4141) that is sleeved fixedly on said connecting member (416) of said connecting unit (412),
an outer race (4142) that surrounds said inner race (4141), and that has a curved internal surface facing said inner race (4141) and curved along an axial direction of said outer race (4142), and
a plurality of rolling elements (4143) that are disposed between said inner race (4141) and said outer race (4142), and
**characterized in that** said inner race (4141) is operable to misalign a central axis of said outer race (4142) from that of said inner race (4141) so as to change the position of the rotating axis of said connecting member (416) relative to said outer race (4142).

5. The wind power generator as claimed in Claim 1, **characterized in that** said bearing member (414) of said bearing unit (411) of each of said bases (41) is a spherical roller bearing.

6. The wind power generator as claimed in Claim 1, **characterized in that**:
said connecting unit (412) of each of said bases (41) further includes two connecting plates (417) that are respectively connected to opposite ends of said connecting member (416);
said shaft unit (42) includes a shaft member (421), two connecting members (422) that are respectively connected to two opposite ends of said shaft member (421), and a plurality of blade members (423) that are connected to said shaft member (421) and angularly spaced apart from each other relative to said shaft member (421);
one of said connecting members (422) of said shaft unit (42) is co-rotatably connected to a corresponding one of said connecting plates (417) of said connecting unit (412) of one of said bases (41); and
the other one of said connecting members (422) of said shaft unit (42) is co-rotatably connected to a corresponding one of said connecting plates (417) of said connecting unit (412) of the other one of said bases (41).

7. The wind power generator as claimed in Claim 6, **characterized in that**:
each of said connecting plates (417) of said connecting unit (412) of each of said bases (41) is formed with a plurality of third perforations (401);
each of said connecting members (422) of said shaft unit (42) is formed with a plurality of fourth perforations (402);
said fourth perforations (402) of each of said connecting members (422) of said shaft unit (42) respectively correspond in position to said third perforations (401) of a corresponding one of said connecting plates (417) of said connecting unit (412) of a corresponding one of said bases (41) to form a plurality of perforation assemblies (405), each of said perforation assemblies (405) being defined by a respective one of said third perforations (401) and a corresponding one of said fourth perforations (402);
said fixing unit (6) further includes a plurality of connecting members (63) that are respectively inserted into said perforation assemblies (405); and
each of said connecting members (63) has a spherical portion (631) that is disposed within said fourth perforation (402) of a corresponding one of said perforation assemblies (405), and has a diameter substantially identical to a diameter of said fourth perforation (402) of the corresponding one of said perforation assemblies (405).

8. The wind power generator as claimed in Claim 1, **characterized in that** said bearing unit (411) of each of said bases (41) further includes a plurality of reinforcing plates (415) that are connected between said substrate (413) and said bearing member (414) of said base (41).

9. The wind power generator as claimed in Claim 1, **characterized in that** said rotating frame unit (3) includes a frame member (431) surrounding and co-rotatably connected to said bases (41) and said shaft unit (42), and a plurality of reinforcing members (432) interconnecting said frame member (431) and said shaft unit (42), said blades (44) of said rotating unit (4) being connected to said frame member (431).

10. The wind power generator as claimed in Claim 1, **characterized in that** said power generating unit (5) further includes a gearbox (52) interconnecting said rotating unit (4) and said power generating member (51) to transmit rotation from said rotating unit (4) to said power generating member (51).

11. The wind power generator as claimed in Claim 1, **characterized by** a plurality of said frame units (3) and a plurality of said rotating units (4), said frame units (3) being stacked vertically.
